# EUROPEAN PATENT APPLICATION

(11) **EP 1 325 868 A1**
(43) Date of publication of application: **09.07.2003**
(21) Application number: 02425003.7
(22) Date of filing: 08.01.2002
(51) Int. Cl.: B65B 51/30, B65B 41/18

(54) **Packaging unit for continuously producing sealed packages, containing pourable food products, from a tube of packaging material**

(71) Applicant: Tetra Laval Holdings & Finance SA, 1009 Pully (CH)
(72) Inventor: Sabbadini, Davide, 41012 Carpi (IT); Borghi, Davide, 41100 Modena (IT)
(74) Representative: Jorio, Paolo

(57) **Abstract**

There is described a forming unit (1) for producing sealed packages (2) from a tube (3) of sheet packaging material fed along a feed path (A) and filled with a pourable food product. The unit (1) has jaw means (6, 6') acting cyclically on the tube (3) to grip and seal it at equally spaced cross sections defining opposite sealing bands (15) of the packages (2); interacting means (23; 16) interacting with the tube (3) and fitted movably to the jaw means (6, 6'); and actuating means (27; 40) for operating the interacting means (23; 16) and mounted entirely on the jaw means (6, 6').

## Description

The present invention relates to a forming unit for producing sealed packages from a tube of sheet packaging material filled with a pourable food product.

As is known, many pourable food products, such as fruit juice, pasteurized or UHT (ultra-high-temperature processed) milk, wine, tomato sauce, etc., are sold in packages made of sterilized sheet packaging material.

A typical example of such a package is the parallelepiped-shaped package for liquid or pourable food products known as Tetra Brik Aseptic (registered trademark), which is formed by folding and sealing a web of laminated packaging material.

The packaging material has a multilayer structure comprising a layer of paper material covered on both sides with layers of heat-seal plastic material, e.g. polyethylene; and, in the case of aseptic packages for long-storage products such as UHT milk, the packaging material also comprises a layer of oxygen-barrier material defined, for example, by a sheet of aluminium, which is superimposed on a layer of heat-seal plastic material, and is in turn covered with another layer of heat-seal plastic material eventually defining the inner face of the package contacting the food product.

As is known, such packages are made on fully automatic packaging machines, on which a continuous tube is formed from the web-fed packaging material. More specifically, the web of packaging material is unwound off a reel and fed through an aseptic chamber on the packaging machine, in which it is sterilized, e.g. by applying a chemical sterilizing agent, such as hydrogen peroxide, which is later vaporized by heating and/or subjecting the packaging material to radiation of appropriate wavelength and intensity; and the web so sterilized is maintained in a closed sterile environment, and is folded and sealed longitudinally into a cylinder to form a continuous tube in known manner.

The tube of packaging material, which in other words forms an extension of the aseptic chamber, is fed continuously in a vertical direction, is filled with the sterilized or sterile-processed food product, and is fed through a forming unit for forming the individual packages.

The forming unit comprises two pairs of jaws acting cyclically and successively on the tube of packaging material to grip and heat seal it along equally spaced cross sections and so form a continuous strip of pillow packages connected to one another by respective transverse sealing bands, i.e. extending perpendicularly to the traveling direction of the tube. The pillow packages are separated by cutting the relative transverse sealing bands, and are then fed to a folding station where they are folded mechanically into the finished parallelepiped shape.

The tube portion gripped between each pair of jaws is heat sealed by heating means carried by one of the jaws and for locally melting the two layers of heat-seal plastic material gripped firmly between the jaws.

When heat sealing is completed, a cutting member, carried by one of the jaws and interacting with the tube of packaging material, is activated to cut the tube along the centerline of the transverse sealing band and so detach a pillow package from the bottom end of the tube of packaging material. The bottom end is therefore sealed transversely, and the jaws, on reaching the bottom dead-center position, are opened to avoid interfering with the above part of the tube. At the same time, the other pair of jaws, operating in the same way, moves down from the top dead-center position to repeat the gripping/forming, sealing and cutting operations as described above.

One problem encountered on known forming units concerns the so-called "decoration correction" system.

That is, the web of packaging material normally comprises a series of equally spaced printed images or decorations on the portions eventually forming the outer surfaces of the packages, so that the web must be fed to the forming unit in such a manner that forming, sealing and cutting of the packages are performed "in register" with the succession of decorations. In actual use, since the decorations are printed equally spaced, the position of each with respect to the position of the jaws on the forming unit may vary, firstly, as a result of varying deformation of the packaging material by the mechanical pressure exerted on it by the jaws, and, secondly, as a result of the pulsating pressure of the pourable food product inside the tube of packaging material. A system for position correcting the decoration is therefore required, since, on a packaging machine operating at high output speed, even small shifts in the position of the decorations with respect to the theoretical register position, if not corrected in real time, may increase with time, thus resulting in the production of unacceptable packages which must be rejected.

On modern packaging machines, such a system comprises an optical sensor for detecting the position of a bar code on each package; and a control unit for comparing the detected position with respect to a theoretical position.

On some commercial machines, each pair of jaws has a pair of traction members for drawing the tube of packaging material, and which are fitted movably to one of the jaws in each pair to form triangular tabs at the top and bottom corners of the pillow packages; and, on detecting a decoration position error, the control unit adjusts the speed of the packaging material web feed motor. If this correction is not sufficient, the traction members are controlled to slightly increase or reduce pull on the packaging material. On other machines, the control unit acts directly on the traction members, with no possibility of adjusting the speed of the packaging material web feed motor; and the operation is repeated until the position of the decoration coincides with the theoretical position.

More recently, solutions have been devised whereby the position of the decorations on the packaging material is controlled by adjusting the travel and timing of the pairs of jaws acting on the tube.

As described, for example, in Italian Patent n. 1296062, the traction members are operated by means of a continuous linear actuating member, e.g. a pneumatic cylinder, which is fitted to the supporting structure of the forming unit, is activated by the control unit of the decoration correction system, and is connected to the traction members by transmission means.

More specifically, in the case described, the transmission means comprise an actuating rod, which is fitted movably to the jaw fitted with the traction members, is fitted at one end with a tappet member, and is connected at the opposite end to the traction members by respective articulated arms. The tappet member is in turn fitted to run along a cam profile, which is fitted adjustably to the supporting structure of the forming unit, is connected to the actuating member by a motion-conversion assembly, and is movable with respect to the supporting structure by the actuating member.

In other words, operation of the traction members calls for an extremely complex, heavy transmission to transfer motion from the actuating member fitted to the fixed part of the forming unit, to the traction members fitted to the movable jaws, and therefore involves a large number of component parts on both the supporting structure of the forming unit and the jaws, thus greatly increasing the overall cost of the packaging machine, and the time taken to assemble and disassemble the forming unit to perform any maintenance work.

The complexity of known forming units is further compounded by the jaws normally comprising, in addition to the traction members, further movable members, such as so-called "volume boxes", which mate to define the volume and shape of the pillow packages being formed, and which call for dedicated actuating means.

It is an object of the present invention to provide a forming unit for producing sealed packages from a tube of sheet packaging material filled with a pourable food product, and designed to eliminate the aforementioned drawbacks typically associated with known units.

According to the present invention, there is provided a forming unit for producing sealed packages from a tube of sheet packaging material fed along a feed path and filled with a pourable food product, said unit comprising jaw means acting cyclically on said tube to grip and seal it at equally spaced cross sections defining opposite sealing bands of said packages; interacting means interacting with said tube and fitted movably to said jaw means; and actuating means for operating said interacting means; characterized in that said actuating means are mounted entirely on said jaw means.

A preferred, non-limiting embodiment of the present invention will be described by way of example with reference to the accompanying drawings, in which:
Figures 1 and 2 show respective front and side views, with parts removed for clarity, of a forming unit, in accordance with the present invention, for producing sealed packages from a tube of sheet packaging material filled with a pourable food product;
Figure 3 shows an exploded, rear-lateral view in perspective, with parts removed for clarity, of a sealing jaw of the Figure 1 and 2 forming unit;
Figure 4 shows a front-lateral view in perspective of the Figure 3 jaw;
Figure 5 shows a larger-scale rear view of a portion of the Figure 3 jaw;
Figure 6 shows a rear-lateral view in perspective, with parts removed for clarity, of a variation of the Figure 3 sealing jaw.

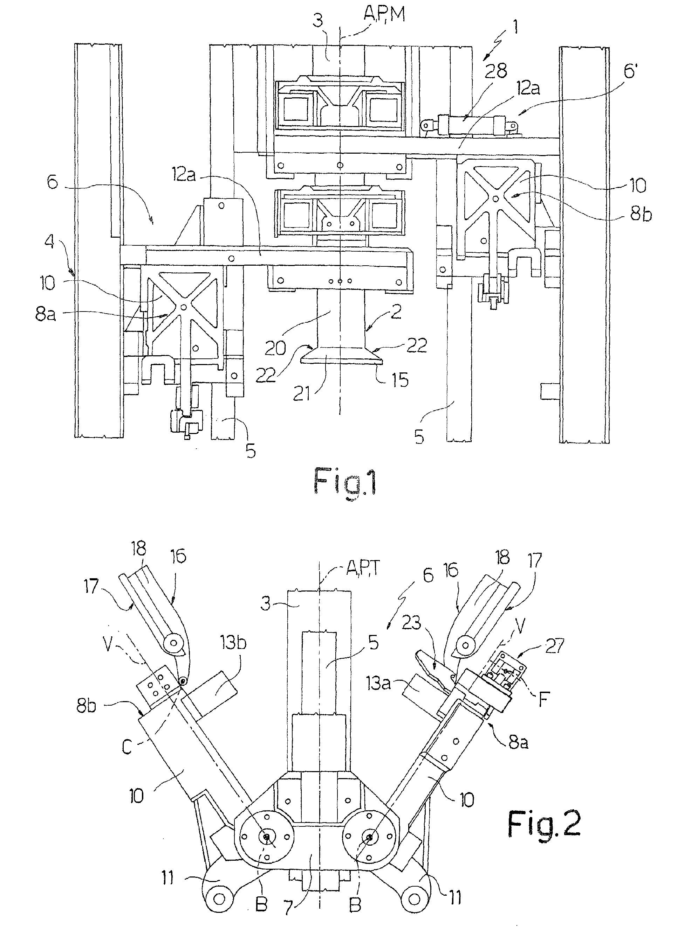

Number 1 in Figure 1 indicates as a whole a forming unit for producing sealed packages 2 from a tube 3 of sheet packaging material having an axis A, filled with a pourable food product, and fed along a vertical path P parallel to axis A.

More specifically, tube 3 is formed in known manner by longitudinally folding and sealing a web of packaging material, and is filled, upstream from unit 1, with the food product for packaging.

The web of packaging material has a multilayer structure (not shown), and conveniently comprises a layer of paper material covered on both sides with layers of heat-seal plastic material, e.g. polyethylene. In the case of aseptic packages for long-storage products such as UHT milk, the packaging material also comprises a layer of oxygen-barrier material defined, for example, by a sheet of aluminium, which is superimposed on a layer of heat-seal plastic material, and is in turn covered with another layer of heat-seal plastic material eventually defining the inner face of packages 2 contacting the food product.

On the side eventually defining the outer surface of packages 2, the web of packaging material has a succession of graphics or decorations repeated at equally spaced intervals.

Unit 1 comprises a supporting structure 4 defining two vertical guides 5, which are arranged symmetrically with respect to a central vertical longitudinal plane M of unit 1 through axis A, and the respective axes of which lie in a central vertical transverse plane T of unit 1. Axis A therefore defines the intersection of planes M and T.

Unit 1 comprises, in known manner, two forming assemblies 6, 6', which move vertically along respective guides 5, and interact alternately with tube 3 of packaging material to grip and heat seal cross sections of the tube.

Since assemblies 6, 6' are symmetrical with respect to plane M, only one (assembly 6) is shown in detail in Figure 2 and described below. The corresponding parts of assemblies 6, 6' are indicated in the drawings using the same reference numbers.

With reference to Figures 1 and 2, assembly 6 substantially comprises a slide 7 running along respective guide 5; and two jaws 8a, 8b hinged at the bottom to slide 7 about respective horizontal axes B, parallel to and symmetrical with respect to plane T, so as to open and close substantially bookfashion.

The reciprocating movement of slides 7 and the opening/closing movement of jaws 8a, 8b are controlled in known manner (not described) by pairs of vertical rods (not shown) in turn controlled by rotary cams or servomotors.

More specifically, each jaw 8a, 8b comprises a main control body 10 - substantially in the form of an appropriately ribbed, quadrangular plate (Figures 1 and 2) extending along a work plane V of jaw 8a, 8b containing respective axis B - which is hinged, close to its bottom side, to slide 7, and has a control arm 11 projecting from a face of body 10 on the opposite side to plane V, and activated in known manner (not shown) by one of said vertical rods.

Jaws 8a, 8b also comprise respective supporting arms 12a, 12b fixed to the top end of respective bodies 10, and which project towards and beyond plane M, in a direction parallel to respective axes B, and substantially along respective work planes V, so as to be located on opposite sides of tube 3.

The projecting portions of arms 12a, 12b are fitted with respective bar-shaped sealing members 13a, 13b (Figure 2), which interact with tube 3, and which may be defined, for example, by an inductor for generating a current in the aluminium layer of the packaging material and so melting the thermoplastic layer as a consequence of the Joule effect, and by a contrasting pad providing the necessary mechanical support to grip tube 3 to the required pressure.

Jaws 8a, 8b are movable between a closed position, in which respective sealing members 13a, 13b grip tube 3, and a fully-open position.

At the transverse sealing step, tube 3 is heat sealed along equally spaced cross sections to form respective sealing bands 15.

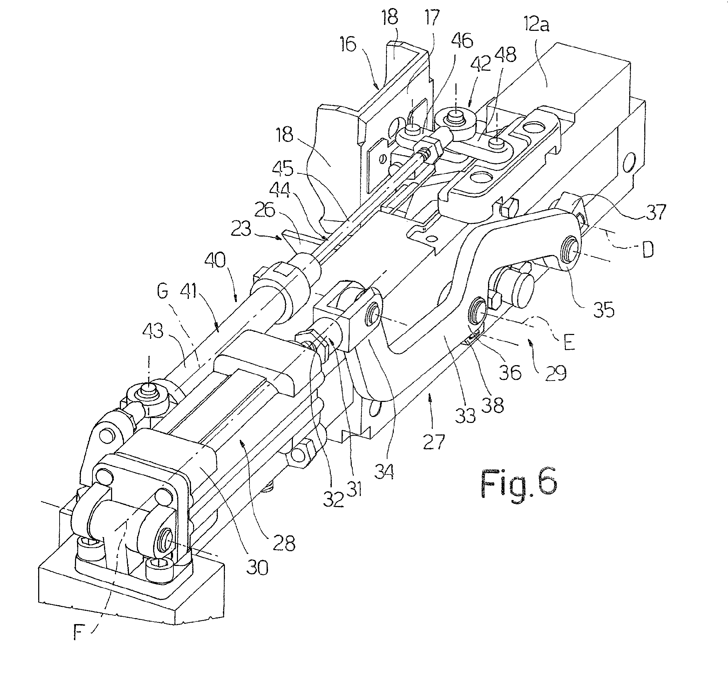

Over respective sealing members 13a, 13b, arms 12a, 12b of jaws 8a, 8b support respective so-called "volume boxes" for controlling the volume of packages 2, and which are shown in more detail in Figure 6.

Boxes 16 are hinged at the bottom to arms 12a, 12b of respective jaws 8a, 8b about respective axes C parallel to axes B, and are maintained in a predetermined position on arms 12a, 12b by known elastic means not shown.

Boxes 16 have a C-shaped cross section open at the front, and, following transverse sealing by members 13a, 13b, cooperate with each other to define a cavity, of given shape and volume, enclosing tube 3 into a rectangular-section configuration.

Each box 16 comprises a flat rear wall 17 facing arm 12a, 12b of relative jaw 8a, 8b and substantially parallel to relative plane V; and two flat lateral walls 18 extending perpendicularly from opposite lateral edges of rear wall 17.

This forming step produces pillow packages 2 having a main portion 20 of the same shape and volume as the finished packages; and transition portions 21 connecting main portion 20 to the respective adjacent sealing bands 15, and which are defined laterally by substantially triangular faces 22.

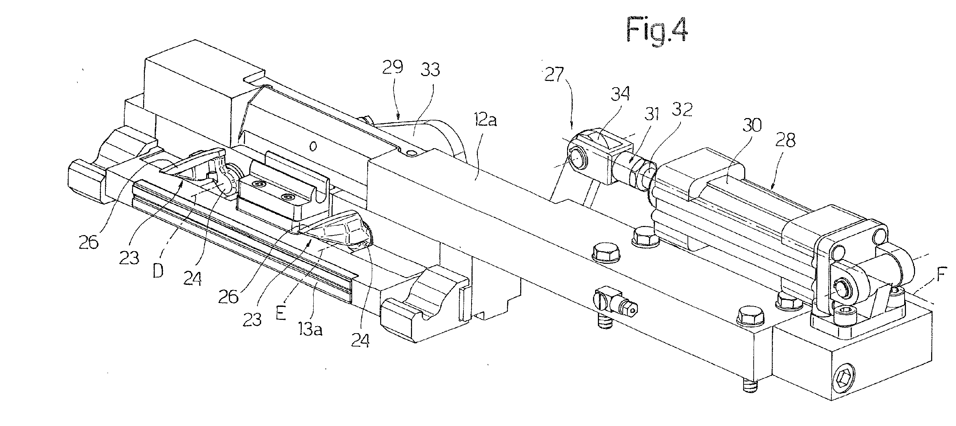

As shown in Figures 2, 3, 4 and 5, one (8a) of jaws 8a, 8b comprises, in known manner, two movable traction members 23 for controlling longitudinal feed of tube 3 through unit 1.

Movable members 23 are located, symmetrically with respect to axis A, on either side of and adjacent to tube 3. More specifically, movable members 23 comprise respective pins 24 fitted in axially-fixed, rotary manner through respective holes formed through arm 12a and having axes D, E perpendicular to plane V; and respective tabs 26 carried eccentrically by pins 24 and which interact with the packaging material of tube 3.

More specifically, tabs 26 project from respective front ends of pins 24 facing tube 3, and therefore project from arm 12a on the same side as and over relative sealing member 13a, and are curved with their concavities facing, and taper in section towards tube 3.

Movable members 23 are counter-rotated by an actuating device 27 about respective axes D, E, i.e. so as to describe equal, opposite angles and so move tabs 26 symmetrically with respect to path P. Actuating device 27 is active at the forming step, so as to cause tabs 26 to act on lateral faces 22 of transition portions 21 of pillow packages 2, and exert variable pull on tube 3 in the tube feed direction to correct any error in the position of the decorations on the packaging material.

More specifically, actuating device 27 is controlled by a known control unit - not shown, by not forming part of the present invention - which, by means of one or more optical sensors, detects the actual position of the decorations on the packaging material from which packages 2 are to be formed, compares it with a theoretical reference position, and accordingly adjusts the pull to be exerted by movable traction members 23. Alternatively, actuating device 27 may operate movable members 23 between two predetermined positions to simply form the individual packages 2.

According to an important characteristic of the present invention, actuating device 27 is fitted to and supported entirely by arm 12a of jaw 8a.

More specifically, actuating device 27 comprises a continuous linear actuator 28, e.g. a pneumatic cylinder; and a transmission mechanism 29 interposed between actuator 28 and pins 24 of movable members 23.

Actuator 28 comprises an outer jacket 30 fixed to arm 12a of jaw 8a, adjacent to main body 10, and having an axis F parallel to the maximum-extension direction of arm 12a; and a movable member 31 fitted to slide axially inside jacket 30, and having a rod 32 projecting from jacket 30 and connected to transmission mechanism 29.

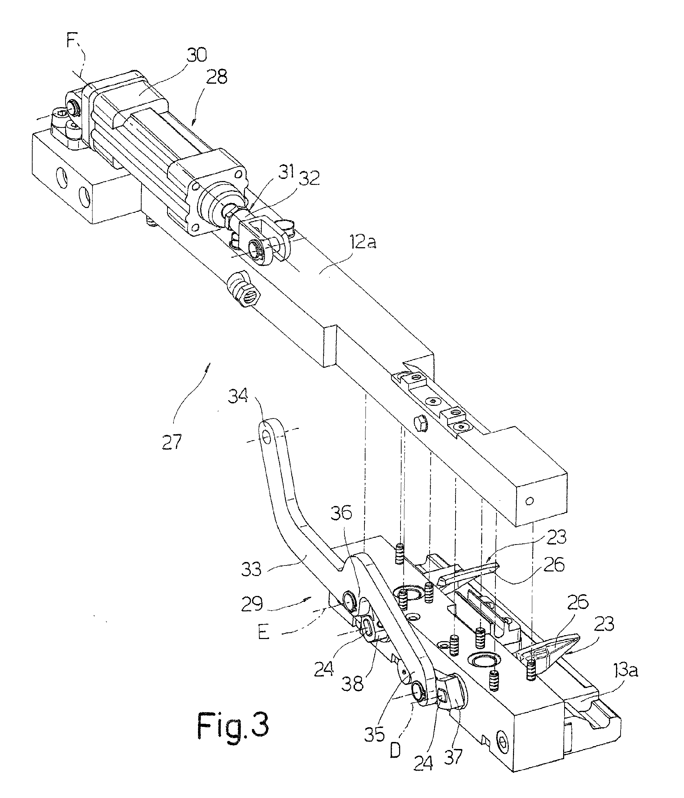

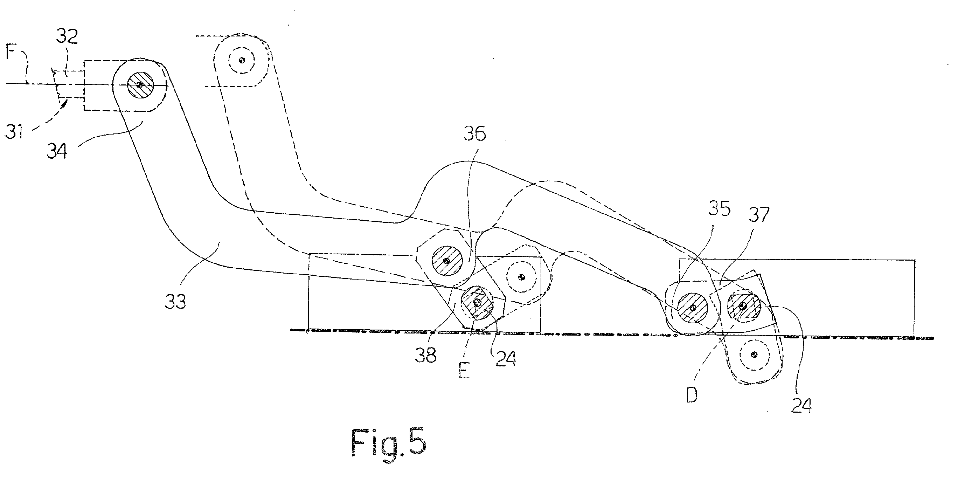

As shown particularly in Figures 3 and 5, transmission mechanism 29 comprises a contoured lever 33, which has an end portion 34 hinged to a free end of rod 32 and defining two fastening portions 35, 36, to which are hinged respective actuating arms 37, 38 for activating movable members 23 and which are fitted to and project radially from the rear ends of respective pins 24.

More specifically, lever 33 is substantially S-shaped, extends along a plane parallel to plane V, and faces the opposite side of arm 12a to that from which relative sealing member 13a projects. In the example shown, one (35) of fastening portions 35, 36 is defined by an end portion of lever 33 opposite end portion 34, and the other fastening portion (36) is defined by an intermediate portion of lever 33.

Actuating arms 37, 38 form different angles with lever 33, so that linear displacement of rod 32 corresponds to opposite rotations of movable members 23 about respective axes D, E.

In the Figure 6 variation, in addition to actuating device 27, jaw 8a of each forming assembly 6, 6' also supports a push device 40, which acts on relative box 16 to grip it against the corresponding box 16 of jaw 8b. A similar push device is obviously fitted in exactly the same way to jaw 8b of each forming assembly 6, 6' to activate relative box 16.

Push device 40 comprises a linear actuator 41, e.g. a pneumatic cylinder, fitted to arm 12a of jaw 8a and parallel to cylinder 28; and a toggle mechanism 42 interposed between actuator 41 and the rear of relative box 16.

More specifically, actuator 41 comprises an outer jacket 43 fixed to arm 12a of jaw 8a, adjacent to body 10, and having an axis G parallel to axis F; and a movable member 44 fitted to slide axially inside jacket 43, and having a rod 45 projecting from jacket 43 and connected by its free end to toggle mechanism 42.

Toggle mechanism 42 comprises two levers 46, 48 extending crosswise to rod 45 of movable member 44, and having adjacent ends hinged to each other and to rod 45, and opposite ends hinged respectively to rear wall 17 of relative box 16, and to arm 12a, close to the side of arm 12a facing lever 33.

Rod 45 is movable between a forward position corresponding to maximum extraction from jacket 43, and in which it maintains levers 46, 48 substantially perpendicular to rear wall 17 of relative box 16, so as to exert maximum pressure against box 16 of the opposing jaw 8b, and a withdrawn position corresponding to minimum extraction from jacket 43.

In actual use, jaws 8a, 8b of each forming assembly 6, 6' close as the assembly moves down, so as to grip tube 3 with a downward vertical component of motion equal to the traveling speed of tube 3. More specifically, jaws 8a, 8b of each forming assembly 6, 6' are brought together to gradually deform tube 3 and "flatten" it at a cross section or transverse band. At which point, sealing members 13a, 13b seal the two superimposed portions of the packaging material forming the flattened transverse band.

Once heat sealing is completed, boxes 16 of jaws 8a and 8b are brought together frontwards to define a parallelepiped-shaped cavity defining the volume of main portion 20 of package 2 being formed.

Boxes 16 of opposing jaws 8a, 8b are pushed into contact with each other in opposition to respective elastic means and by activation of respective push devices 40. More specifically, the movement of rod 45 of each actuator 41 opens levers 46 and 48 of toggle mechanism 42 into a position in which they are substantially aligned with each other, thus pushing relative box 16 against the opposing box 16.

In the course of the above forming step, and in coordination with jaws 8a, 8b, actuator 28 is operated to activate movable members 23. More specifically, rod 32 is extracted along axis F from jacket 30 (Figure 5) to accordingly move lever 33; and, by means of arms 37, 38, the movement of lever 33 rotates movable members 23 in opposite directions to draw tube 3 downwards.

Close to a bottom dead-center position in the downward travel of each forming assembly 6, 6', jaws 8a, 8b open to release tube 3, continue opening as they move upwards, and are fully opened before reaching the top dead-center position; at which point, jaws 8a, 8b begin closing, and are fully closed by the time they start moving downwards.

Obviously, the movements of the two forming assemblies 6, 6' are offset by a half-cycle : forming assembly 6 moves up with jaws 8a, 8b open while forming assembly 6' moves down with jaws 8a, 8b closed, so as not to interfere with each other.

The advantages of unit 1 in accordance with the teachings of the present invention will be clear from the foregoing description.

In particular, by fitting actuating device 27 of movable members 23, and possibly also push devices 40 of boxes 16, integrally and directly to relative jaws 8a, 8b, the number of component parts of forming assemblies 6, 6' is reduced considerably, thus simplifying the assemblies, reducing the cost and overall weight of unit 1, and so enabling unit 1 to be assembled and disassembled faster for any maintenance work.

Clearly, changes may be made to unit 1 as described herein without, however, departing from the scope of the accompanying Claims.

In particular, unit 1 may comprise two sets of jaws 8a and 8b, which form part of respective chain conveyors, in turn defining respective endless jaw feed paths, extend on opposite sides of the feed path of tube 3, and cooperate cyclically with each other in pairs. In which case, each forming assembly 6, 6' would be defined by a jaw on one of the two conveyors, and by an opposing jaw on the other conveyor.

## Claims

1. A forming unit (1) for producing sealed packages (2) from a tube (3) of sheet packaging material fed along a feed path (A) and filled with a pourable food product, said unit (1) comprising jaw means (6, 6') acting cyclically on said tube (3) to grip and seal it at equally spaced cross sections defining opposite sealing bands (15) of said packages (2); interacting means (23; 16) interacting with said tube (3) and fitted movably to said jaw means (12a, 12b); and actuating means (27; 40) for operating said interacting means (23; 16); **characterized in that** said actuating means (27; 40) are mounted entirely on said jaw means (6, 6').

2. A unit as claimed in Claim 1, **characterized in that** said jaw means comprise at least two forming assemblies (6, 6'), each defined by a pair of jaws (8a, 8b) cooperating cyclically with each other and with said tube (3).

3. A unit as claimed in Claim 1 or 2, **characterized in that** said interacting means comprise traction means (23) for exerting pull on said tube (3) of packaging material to correct the travel of said tube along said feed path (A).

4. A unit as claimed in Claim 3, **characterized in that** said traction means comprise two movable members (23) carried by one (8a) of said jaws (8a, 8b) of each said forming assembly (6, 6') and interacting on opposite sides with said tube (3).

5. A unit as claimed in Claim 4, **characterized in that** said movable members (23) comprise respective pins (24) rotating with respect to the relative said jaw (8a); and respective tabs (26) carried eccentrically by said pins (24).

6. A unit as claimed in Claim 4 or 5, **characterized in that**, for each said one (8a) of said jaws (8a, 8b), said actuating means (27) comprise a first control actuator (28), and transmission means (29) interposed between said first actuator (28) and said movable members (23).

7. A unit as claimed in Claim 6, **characterized in that** each said first actuator (28) comprises a first output member (31) movable in a direction (F) crosswise to said feed path (A) of said tube (3) and to the axes (D, E) of said pins (24) of the relative said movable members (23); and **in that** said transmission means (29) comprise, for each said one (8a) of said jaws (8a, 8b), a lever (33), which has a connecting portion (34) hinged to said first output member (31) of the relative said first actuator (28), and defines two fastening portions (35, 36) to which are hinged respective arms (37, 38) for activating the relative said movable members (23) and carried eccentrically by the respective said pins (24).

8. A unit as claimed in any one of the foregoing Claims, **characterized in that** said interacting means comprise box means (16) enclosing portions (20) of said tube (3) of predetermined shape and volume and eventually defining said packages (2).

9. A unit as claimed in Claim 8, **characterized in that**, for each said forming assembly (6, 6'), said box means comprise a pair of boxes (16) connected movably to the respective said jaws (8a, 8b) and cooperating with each other to define a cavity of predetermined shape and volume and enclosing said tube (3).

10. A unit as claimed in Claim 9, **characterized in that**, for each said forming assembly (6, 6'), said actuating means comprise push means (40) activated selectively to grip together the relative said boxes (16).

11. A unit as claimed in Claim 10, **characterized in that** said push means (40) comprise, for each said jaw (8a, 8b), a second control actuator (41) having a second output member (44) movable in a direction (G) crosswise to said feed path (A) of said tube (3); and a toggle mechanism (42), which extends crosswise to the travel direction (G) of said second output member (44), is interposed between the relative said jaw (8a, 8b) and the relative said box (16), and is activated by the second output member (44).
